# EUROPÄISCHE PATENTANMELDUNG

(11) **EP 1 206 976 A2**
(43) Veröffentlichungstag der Anmeldung: **22.05.2002**
(21) Anmeldenummer: 01124106.4
(22) Anmeldetag: 10.10.2001
(51) Int. Cl.: B05D 5/08

(54) **Verwendung von Apparaten mit schwer benetzbaren Oberflächen**

(30) Priorität: 17.11.2000 DE 10057319
(71) Anmelder: BASF AKTIENGESELLSCHAFT, 67056 Ludwigshafen (DE)
(72) Erfinder: Keller, Harald, Dr., 67069 Ludwigshafen (DE); Fürstner, Reiner, Dr., 53424 Remagen (DE); Neinhuis, Christoph, Dr., 53115 Bonn (DE)

(57) **Zusammenfassung**

Verwendung von Apparaten und Apparateteilen mit Oberflächen, die eine Mikrostruktur, bestehend aus Erhebungen einer Höhe von 10 nm bis 10 µm im Abstand von 20 nm bis 10 µm oder entsprechend dimensionierte Rillen, oder eine Makrostruktur, bestehend aus Erhebungen in einer mittleren Höhe von 10 µm bis 1 mm und einem mittleren Abstand von 10 µm bis 1 mm, aufweisen und die hydrophobiert sind, bei Verarbeitung, Transport oder Lagerung von Dispersionen.

## Beschreibung

Die vorliegende Erfindung betrifft die Verwendung von Apparaten und Apparateteilen mit Oberflächen, die eine Mikrostruktur, bestehend aus Erhebungen einer Höhe von 10 nm bis 10 µm im Abstand von 20 nm bis 10 µm oder entsprechend dimensionierte Rillen, oder eine Makrostruktur, bestehend aus Erhebungen in einer mittleren Höhe von 10 µm bis 1 mm und einem mittleren Abstand von 10 µm bis 1 mm, aufweisen und die hydrophobiert sind, bei der Herstellung, Verarbeitung, dem Transport oder der Lagerung von Dispersionen, die mindestens einen Emulgator enthalten. Weiterhin betrifft die vorliegende Erfindung ein Verfahren zur Herstellung, Verarbeitung, zum Transport oder die Lagerung von Dispersionen, dadurch gekennzeichnet, dass man die Dispersionen in Apparaten oder mit Hilfe von Apparateteilen herstellt, verarbeitet, transportiert oder lagert, die Oberflächen aufweisen, die eine Mikrostruktur, bestehend aus Erhebungen einer Höhe von 10 nm bis 10 µm im Abstand von 20 nm bis 10 µm oder entsprechend dimensionierte Rillen, oder eine Makrostruktur, bestehend aus Erhebungen in einer mittleren Höhe von 10 µm bis 1 mm und einem mittleren Abstand von 10 µm bis 1 mm, aufweisen und die hydrophobiert sind.

Ablagerungen und Anbackungen in Apparaten und Apparateteilen für den Anlagenbau bedeuten ein ernsthaftes Problem in der Industrie, insbesondere in der chemischen Industrie. Besonders betroffen sind dabei Apparate-, Behälter- und Reaktorwandungen, Kesselwandungen, Austragsvorrichtungen, Armaturen, Pumpen, Filter, Verdichter, Zentrifugen, Kolonnen, Trockner, Fliehkraftabscheider, Wäscher, Zerkleinerungsmaschinen, Einbauten, Füllkörper und Mischorgane. Diese Ablagerungen werden auch als Beläge oder als Fouling bezeichnet.

Dabei können die Beläge auf vielfältige Art schädlich oder hindernd für den Prozess wirken und zur Notwendigkeit führen, entsprechende Reaktoren oder Verarbeitungsmaschinen wiederholt abzuschalten und zu reinigen.

Mit Belägen verkrustete Messeinrichtungen können zu fehlerhaften und irreführenden Ergebnissen führen, durch die Bedienungsfehler auftreten können.

Ein weiteres Problem, das durch die Bildung von Ablagerungen entsteht, ist darin begründet, dass insbesondere in Belägen in Polymerisationsreaktoren die molekularen Parameter wie Molekulargewicht oder Vernetzungsgrad deutlich von den Produktspezifikationen abweichen. Wenn sich Ablagerungen während des laufenden Betriebs lösen, können sie das Produkt verunreinigen (z.B. Stippen in Lacken, Einschlüsse in Suspensionsperlen). Unerwünschte Ablagerungen können im Falle von Reaktorwandungen, Füllkörpern oder Mischorganen weiterhin zu einer unerwünschten Veränderung des Verweilzeitprofils der Apparatur führen oder die Wirksamkeit der Einbauten oder Mischorgane als solche beeinträchtigen. Abbrechende grobe Teile von Belägen können zum Verstopfen von Austrags- und Aufarbeitungsvorrichtungen führen, kleine Teile können zu Beeinträchtigungen des produzierten Produktes führen.

Bei den Ablagerungen, deren Bildung verhindert werden soll, handelt es sich um Beläge, die beispielsweise durch Reaktionen mit und auf Oberflächen verursacht werden kann. Weitere Gründe sind die Adhäsion an Oberflächen, die durch van-der-Waals-Kräfte, Polarisierungseffekte oder elektrostatische Doppelschichten verursacht werden kann. Wichtige Effekte sind weiterhin Stagnation der Bewegung an der Oberfläche und gegebenenfalls Reaktionen in den genannten stagnierenden Schichten. Schließlich sind zu nennen: Niederschläge aus Lösungen, Verdampfungsrückstände, Vercrackung an lokal heißen Oberflächen sowie mikrobiologische Aktivitäten. Die Ursachen sind abhängig von den jeweiligen Stoffkombinationen und können alleine oder in Kombination wirksam werden. Während die Vorgänge, wegen derer die unerwünschten Beläge entstehen, recht gut untersucht sind (z.B. A.P. Watkinson und D.I. Wilson, Experimental Thermal Fluid Sci. 1997, *14*, 361 und darin zitierte Literatur), gibt es nur wenig einheitliche Konzepte zur Verhinderung der oben beschriebenen Ablagerungen. Die bisher bekannten Verfahren haben technische Nachteile.

Mechanische Lösungen haben den Nachteil, dass sie erhebliche Mehrkosten verursachen können. Zusätzliche Reaktoreinbauten können weiterhin das Strömungsprofil von Fluiden in den Reaktoren deutlich verändern und dadurch eine teure Neuentwicklung des Verfahrens erforderlich machen. Chemische Additive können zu einer unerwünschten Kontamination des Produktes führen; einige Additive belasten die Umwelt.

Aus diesen Gründen wird verstärkt nach Möglichkeiten gesucht, die Fouling-Neigung durch Modifizierung von Apparaten und Apparateteilen für den Anlagenbau direkt zu senken.

Zahlreiche chemische Reaktionen werden in Dispersionen und dabei bevorzugt in Gegenwart von Emulgatoren durchgeführt. Beispielhaft für die Reaktionen seien die Emulsionspolymerisation von Acrylsäure oder Acrylsäurederivaten oder die Suspensions-Polymerisation oder Suspensions-Copolymerisation von Styrol genannt. Zwar haben die Emulgatoren eine die Oberflächenspannung senkende Wirkung, d.h. an den Stellen, an denen die Emulgator-haltige Emulsion oder Suspension die Oberfläche der Apparate oder Apparateteile vollständig und im Verlauf der Reaktion oder des Transports ständig benetzt, lassen sich die Apparate oder Apparateteile mit vertretbarem Aufwand reinigen. Anders sieht es bei solchen Apparateteilen aus, die nur mit Spritzern der betreffenden Emulsion oder Suspension in Berührung kommen. An diesen Stellen kommt es besonders leicht zu Anbackungen und Ablagerungen. So beobachtet man beispielsweise bei der Emulsionspolymerisation nach dem Entleeren des Reaktors häufig ein ringförmiges Fouling an der Phasengrenze flüssig/gasförmig.

WO 00/40775, WO 00/40774 und WO 00/40773 beschreiben Verfahren zur Beschichtung von Oberflächen, speziell Oberflächen von Reaktoren für die Hochdruckpolymerisation von 1-Olefinen bzw. Oberflächen von Wärmetauschern, durch stromloses Abscheiden einer NiP/PTFE-Schicht oder einer CuP/PTFE-Schicht, durch das die betreffenden Metalloberflächen antihaftend modifiziert werden können. Diese antihaftenden Eigenschaften werden sowohl gegenüber Verunreinigungen, die aus wässrigem Milieu abgeschieden werden, beobachtet, als auch gegenüber organischen Lösemitteln und Dispersionen (Suspensionen, Emulsionen) und in Gegenwart von Emulgatoren. Beim Einsatz der nach dem beschriebenen Verfahren beschichteten Oberflächen in Apparaten und Apparateteilen für den chemischen Anlagenbau, speziell Reaktoren für die Hochdruckpolymerisation von 1-Olefinen, wird jedoch beobachtet, dass die Flächen nicht ausreichend mechanisch stabil sind, so dass nach einer längeren Anwendung wiederum Anbackungen von Produkt beobachtet werden. Eine erneute Beschichtung einer nur teilweise abgetragenen NiP/PTFE-Schicht gelingt jedoch nicht. Weiterhin ist zu beobachten, dass eine einmal abgeschiedene NiP/PTFE-Schicht nur schlecht wieder entfernt werden kann, wenn sie in einem Reaktor oder Apparateteil nicht mehr erwünscht ist. Insbesondere in Reaktoren mit raschem Produktwechsel, in denen gelegentlich auch Reaktionen bei über 400°C durchgeführt werden sollen, hat sich eine Beschichtung mit NiP/PTFE nicht bewährt. Schließlich ist als Nachteil zu nennen, dass insbesondere bei der Beschichtung großvolumiger Reaktoren große Mengen an Tauchbädern verwendet werden müssen, die zu beträchtlichen Lösemittelabfällen führen.

WO 96/04123 offenbart selbstreinigende Oberflächen, die mit Polytetrafluorethylen überzogen werden können und besonders hydrophobe Eigenschaften haben. Die Strukturierung, die aus Erhebungen einer Höhe von 5 - 100 µm im Abstand 5 - 200 µm besteht, wird durch Anätzen oder Prägen der Oberfläche erreicht, durch physikalische Methoden wie Sandstrahlen oder lonenätzung mit beispielsweise Sauerstoff. Anschließend wird die Oberfläche mit Teflon beschichtet. Die mechanische Stabilität derartig hydrophobierter Schichten ist jedoch viel zu gering für eine Verwendung im chemischen Apparatebau, insbesondere für Polymerisationsreaktoren, in denen starke Scherkräfte wirken. Gegenüber Emulgator-haltigen Suspensionen oder Dispersionen wirken die so erzeugten Strukturen jedoch nicht schmutzabweisend. Durch die feinen Strukturierung wird der Schmutz sogar besonders gleichmäßig in die Zwischenräume zwischen den Erhebungen eingebracht.

Weiterhin sind strukturierte Oberflächen mit hydrophoben Eigenschaften bekannt (EP-A 0 933 388), die so hergestellt werden, dass man die betreffende Oberfläche beispielsweise anätzt, dadurch Erhebungen einer Höhe von 50 nm bis 10 µm im Abstand von 50 nm bis 10 µm oder entsprechend dimensionierte Rillen auf der Oberfläche herstellt und anschließend mit einer Schicht eines hydrophoben Polymers, beispielsweise Polyvinylidenfluorid, überzieht. Diese Schichten können weiterhin fluorierte Wachse, beispielsweise Hostaflone®, enthalten. Die derart modifizierten Oberflächen sind hydrophob und oleophob. Als Anwendungen Halterungen von Wafern in der Halbleiterproduktion genannt, weiterhin die Herstellung oder Beschichtung von Scheinwerfern, Windschutzscheiben oder Abdeckungen von Solarzellen. Jedoch sind auch derartige mikrostrukturierte Oberflächen nicht schmutzabweisend gegenüber Emulgator-haltigen Dispersionen.

Außerdem wurde von Tsujii et al. in *Angew. Chem.* 1997, *109,* 1042 ein Verfahren publiziert, durch nachträgliches Hydrophobieren eine mikrostrukturierte Metalloberfläche aus beispielsweise Aluminium, welches anodisch anoxidiert wurde, abstoßend gegen zahlreiche Flüssigkeiten zu machen. Die von den Autoren hergestellten Oberflächen sind jedoch von ideal ölabstoßenden Oberflächen noch weit entfernt (S. 1044, Mitte). Das Verhalten gegenüber Emulgator-haltigen Dispersionen wurde nicht geprüft.

Am 22.09.2000 wurde auf der GVC-Jahrestagung in Karlsruhe (Zusammenfassung in *Chemie Ingenieur Technik* 2000, *72*, 972) über Untersuchungen an hydrophoben und oleophoben mikrostrukturierten Oberflächen berichtet, die zusätzlich zur Mikrostrukturierung eine Makrostrukturierung aufweisen. Diese Makrostrukturierung besteht aus Erhebungen in einer mittleren Höhe von 10 µm bis 1 mm und einem mittleren Abstand von 10 µm bis 1 mm. Auch Fürstner hydrophobierte nachträglich eine anodisch oxidierte Metalloberfläche, beispielsweise aus Cu oder Al, und beobachtete eine gute, aber nicht ideale abstoßende Wirkung gegenüber wässrigen oder organischen Lösemitteln. Das Verhalten derartig präparierter Oberflächen gegenüber Emulgator-haltigen Dispersionen wurde nicht geprüft.

Es bestand also die Aufgabe, modifizierte Oberflächen zu finden, die auch gegenüber Emulgator-haltigen Dispersionen schmutzabweisendes Verhalten zeigen.

Überraschend wurde gefunden, dass sich Oberflächen gegenüber Dispersionen als schmutzabweisend erweisen, wenn man die Oberflächen mit einer Mikrostruktur mit Erhebungen mit einer mittleren Höhe von 10 nm bis 10 µm und einem Abstand von 20 nm bis 10 µm oder einer Makrostruktur mit Erhebungen in einer mittleren Höhe von 10 µm bis 1 mm und einem mittleren Abstand von 10 µm bis 1 mm versieht und anschließend hydrophobiert. Besonders schmutzabweisend sind Oberflächen gegenüber Dispersionen, wenn man die Oberflächen mit einer Mikrostruktur mit Erhebungen mit einer mittleren Höhe von 10 nm bis 10 µm und einem Abstand von 20 nm bis 10 µm sowie einer Makrostruktur mit Erhebungen in einer mittleren Höhe von 10 µm bis 1 mm und einem mittleren Abstand von 10 µm bis 1 mm versieht und anschließend hydrophobiert.

Grundsätzlich können die Oberflächen aus verschiedensten Werkstoffen bestehen, wobei metallische Werkstoffe bevorzugt sind. Besonders bevorzugt sind Kupfer, Messing, Aluminium und Stähle wie beispielsweise Chrom-Nickel-Stahl oder Edelstahl.

Die Mikrostruktur und die Makrostruktur wird durch bekannte Methoden wie Anätzen, Schleifen, Strahlen mit einem geeigneten Strahlgut wie beispielsweise Sand, Ionenätzung mit beispielsweise Sauerstoff, elektrochemisches Ätzen oder Tempern in Anwesenheit von Sauerstoff erzeugt.

Als Hydrophobiermittel eignen sich solche Stoffe, die über lange gerade oder verzweigte Alkylketten, lange fluorierte Alkylketten oder Dimethylsiloxanketten verfügen. Als terminale Gruppen dieser Ketten eignen sich besonders die Methyl- , Trifluormethyl- und Trimethylsilylgruppe.

Beispiele für besonders geeignete Hydrophobiermittel sind:
- Polychlortrifluorethylen,
- Polytetrafluorethylen,
- Polyvinylidenfluorid,
- Polydimethylsiloxan,
- Wachse wie z.B. Polytetrafluorethylenwachse.

Copolymere, enthaltend Strukturelemente der allgemeinen Formeln A bis D: 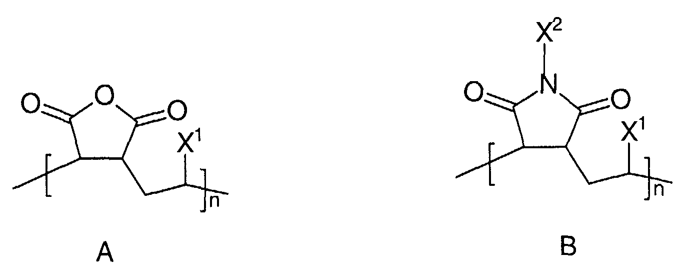 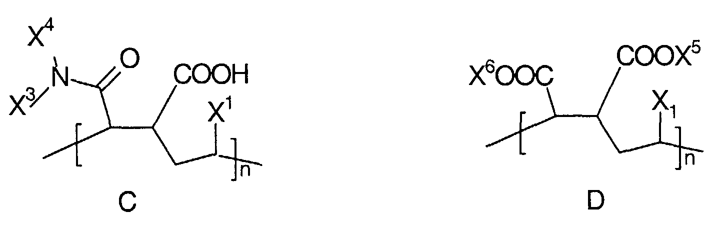 in denen die Variablen wie folgt definiert sind:
n ist eine ganze Zahl von 3 bis 5000
- X¹ - X⁶: Wasserstoff,
C₁-C₃₆-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl, n-Octadecyl, n-Eicosyl, n-C₃₀H₆₁ oder n-C₃₆H₇₃;
C₁-C₃₆-Alkoxygruppen, bevorzugt C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy, iso-Hexoxy, n-Octoxy, n-Decoxy, O-n-C₂₀H₄₁, O-n-C₃₀H₆₁ oder O-n-C₃₆H₃₇;
-O-C(=O)-C₁-C₃₆-Alkyl, wobei C₁-C₃₆-Alkyl wie oben definiert ist,
- (CH₂)ₐ-(CF₂)_{b}-CF₃, -O-(CH₂)ₐ-(CF₂)_{b}-CF₃ oder -O-C(=O)-(CH₂)ₐ-(CF₂)_{b}-CF₃, wobei a eine ganze Zahl von 0 bis 6 und
b eine ganze Zahl von 1 bis 16 bedeutet;
- (CH₂)ₐ-(O)_{c}-(Si(CH₃)₂O)_{d}-R wobei a eine ganze Zahl von 0 bis 6 ist, c für 0 oder 1 steht, d eine ganze Zahl von 2 bis 10000 bedeutet und wobei R für die Reste H, Si(CH₃)₃, C₁-C₃₆-Alkyl oder O- C₁-C₃₆-Alkyl und C₁-C₃₆-Alkyl wie oben stehend definiert ist;

Weitere zur Hydrophobierung geeignete Verbindungen sind Silane der allgemeinen Formel R¹R²R³SiR⁴, in denen die Variablen wir folgt definiert sind:
- R¹ bis R³: sind unabhängig voneinander für -H, -Cl, -OCH₃, -OC₂H₅, -OC₃H₇, -OC₄H₉
- R⁴: steht für
C₁-C₃₆-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl, n-Octadecyl, n-Eicosyl, n-C₃₀H₆₁ oder n-C₃₆H₇₃;
-(CH₂)ₐ-(CF₂)_{b}-CF₃ oder -O-(CH₂)ₐ-(CF₂)_{b}-CF₃ wobei a eine ganze Zahl von 0 bis 6 und b eine ganze Zahl von 1 bis 16 bedeutet;
-OSi(CH₃)₃.

Weitere zur Hydrophobierung geeignete Verbindungen sind Silikonöle mit oder ohne Si-H-Gruppen sowie Silikontenside mit (H₃C)₃SiO-Si(CH₃)-O-Si(CH₃)₃-Gruppen, kommerziell beispielsweise bei Wacker GmbH erhältlich. Auch Fluortenside sind zur Hydrophobierung geeignet.

Das Hydrophobiermittel wird in einem geeigneten Lösungsmittel gelöst. Geeignete Lösungsmittel sind Wasser, Alkohole wie beispielsweise Methanol, Ethanol oder Isopropanol, Aceton, Tetrahydrofuran, Kohlenwasserstoffe wie beispielsweise n-Pentan, Cyclopentan, Cyclohexan, Heptan, Benzin, Toluol, ortho-Xylol, meta-Xylol oder para-Xylol, halogenierte Kohlenwasserstoffe wie beispielsweise Methylenchlorid oder Chloroform, und Mischungen der vorstehenden Lösungsmittel. Die Konzentration des Hydrophobiermittels ist an sich unkritisch. Geeignete Konzentrationen der Hydrophobiermittel sind 0,01 bis 50 Gew.-%, bevorzugt 0,1 bis 20 Gew.-%, besonders bevorzugt 0,5 - 10 Gew.-%:

Geeignete Auftragsverfahren sind Tauchen, Spritzen, Fluten, Pinselauftrag, Rollenauftrag, Walzenauftrag und Bedrucken.

Hydrophobierzeiten betragen von 30 Sekunden bis 48 Stunden , bevorzugt 1 Minute bis 8 Stunden.

Die Hydrophobiertemperatur beträgt in der Regel 5 bis 25°C; in einigen Fällen ist ein Erhöhung der Temperatur bis zum Siedepunkt des verwendeten Lösungsmittels vorteilhaft.

Alternativ zu Lösungen der Hydrophobiermittel können flüssige Hydrophobiermittel auch unverdünnt eingesetzt werden.

Nach dem Hydrophobieren kann man die Oberflächen tempern, muss aber nicht. Geeignete Temperungszeiten betragen von 10 Minuten bis 48 Stunden.

Es wurde nun gefunden, dass die oben beschriebenen Oberflächen besonders abstoßend gegenüber Dispersionen wirken. Diese Dispersionen enthalten üblicherweise Wasser sowie einen organischen oder anorganischen Feststoff und einen oder mehrere Emulgatoren. Anorganische Feststoffe umfassen Oxide, Carbonate oder Silikate von Metallen und Halbmetallen, beispielhaft seien Tonerde, Kieselgel, Kalk oder Quarz genannt. Organische Feststoffe umfassen niedermolekulare und hochmolekulare Stoffe. Beispielhaft seien organische Polymere wie Polystyrol, Polybutadien, Polyethylen, Polypeptide und Eiweiße genannt.

Unter Emulgatoren werden oberflächenaktive Substanzen verstanden, wozu auch Detergenzien und Tenside zählen.

Ein Emulgator kann nichtionischer oder ionischer Natur sein.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Beispiele hierfür sind die Lutensol® -Marken der BASF AG oder die Triton® -Marken der Union Carbide. Weiterhin sind Polyvinylalkohole mit einem mittleren Polymerisationgrad von 100 bis 10000 zu nennen.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈). Weitere anionische Emulgatoren sind Alkalimetall- oder Ammoniumsalze von Fettsäuren mit Alkylresten von C₈ bis C₃₀.

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyl-*N,N,N*-trimethylammoniumbromid, *N*-Dodecyl-*N,N,N*-trimethylammoniumbromid, *N,N*-Distearyl-*N,N*-dimethylammoniumchlorid sowie das Gemini-Tensid *N,N'*-(Lauryldimethyl)ethylendiamindibromid. Zahlreiche weitere Beispiele finden sich in H. Stache, *Tensid-Taschenbuch,* Carl-Hanser-Verlag, München, Wien, 1981 und in McCutcheon's, *Emulsifiers & Detergents,* MC Publishing Company, Glen Rock, 1989.

Die für die erfindungsgemäße Verwendung geeigneten Dispersionen können zusätzlich ein oder mehrere organische Lösemittel enthalten.

Als organische Lösemittel eignen sich aromatische Lösemittel wie Benzol, Toluol, Ethylbenzol, ortho-Xylol, meta-Xylol und para-Xylol sowie Mischungen derselben. Des weiteren eignen sich cyclische Ether wie Tetrahydrofuran und oder acyclische Ether wie Diethylether, Di-*n*-butylether, Di-isopropylether oder 1,2-Dimethoxyethan. Auch Ketone wie Methylethylketon oder Diisobutylketon sind geeignet. Besonders geeignet sind unter den Verwendungsbedingungen flüssige Monomere wie beispielsweise
- Styrol, α-Methylstyrol,
- Acrylsäure, Methacrylsäure, sowie deren Derivate,
- 1-Olefine wie 1-Buten, 1-Penten, 1-Hexen, 1-Octen und 1-Decen,
- 1,3-Diene wie beispielsweise 1,3-Butadien, Isopren oder 2-Chlorbutadien,
- Acrylate wie Acrylsäuremethylester, Acrylsäureethylester, Acrylsäure-n-butylester, Acrylsäure-tert.-butylester oder Acrylsäure-2-ethylhexylester;
- Methacrylsäuremethylester, Methacrylsäureethylester, Methacrylsäure-n-butylester, Methacrylsäure-tert.-butylester oder Acrylsäure-2-ethylhexylester;
- Vinylcarboxylate, wobei Vinylacetat besonders bevorzugt ist.

Unter Verwendungsbedingungen sind Temperaturen von 0°C bis 250°C und Drücke von 1 bar bis 1000 bar zu nennen.

Die nach dem oben beschriebenen Verfahren modifizierten Oberflächen gehören zu Apparaten oder Apparateteilen. Apparateteile können in zahlreichen verschiedenartigen Apparaten für den Anlagenbau eingesetzt werden, wobei der chemische Anlagenbau bevorzugt ist.

Bei den Apparaten handelt es sich um Flüssig-, Gas/Flüssig-, Flüssig/Flüssig-, Fest/Flüssig-, Gas/Fest- oder Gasreaktoren, die beispielsweise in folgenden Ausführungsformen realisiert sind: Rühr-, Strahlschlaufen- und Strahldüsenreaktoren, Strahlpumpen, Verweilzeitzellen, statische Mischer, Rührkolonnen, Rohrreaktoren, Zylinderrührer, Blasensäulen, Strahl- und Venturiwäscher, Festbettreaktoren, Reaktionskolonnen, Verdampfer, Drehscheibenreaktoren, Extraktionskolonnen, Knet- und Mischreaktoren und Extruder, Mühlen, Bandreaktoren oder Drehrohren.

Bei Austragsvorrichtungen handelt es sich beispielsweise um Austragsstutzen, Austragstrichter, Austragsrohre, Ventile, Austragshähne oder Auswurfvorrichtungen.

Bei Armaturen kann es sich beispielsweise um Hähne, Ventile, Schieber, Berstscheiben, Rückschlagklappen oder Scheiben handeln.

Bei Pumpen handelt es sich beispielsweise um Kreisel-, Zahnrad-, Schraubenspindel-, Exzenterschnecken-, Kreiskolben-, Hubkolben-, Membran-, Schneckentrog-, oder Strahlflüssigkeitspumpen handeln, außerdem um Hubkolben-, Hubkolben-Membran-, Drehkolben-, Drehschieber-, Flüssigkeitsring-, Wälzkolben-, Flüssigkeitsring- oder Treibmittelvakuumpumpen sowie Teile der vorgenannten Pumpen.

Bei Filterapparaten handelt es sich beispielsweise um Fluidfilter, Festbettfilter, Gasfilter, Siebe oder Abscheider.

Bei Verdichtern handelt es sich beispielsweise um Hubkolben-, Hubkolben-Membran-, Drehkolben-, Drehschieber-, Flüssigkeitsring-, Rotations-, Roots-, Schrauben-, Strahl- oder Turboverdichter.

Bei Zentrifugen handelt es sich beispielsweise um Zentrifugen mit Siebmantel oder Vollmantel, wobei Teller-, Vollmantelschnecken-(Dekanter), Siebschnecken- und Schubzentrifugen bevorzugt sind. Bei Fliehkraftabscheidern handelt es sich beispielsweise um Zyklone, Multizyklone, Zentrifugaltropfenabscheider oder Drehströmungsentstauber.

Bei Wäschern handelt es um Waschtürme, Strahlwäscher, Wirbelwäscher, Rotationswäscher oder Venturiwäscher.

Bei Kolonnen handelt es sich um Behälter mit Austauschböden, wobei Glocken-, Ventil- oder Siebböden bevorzugt sind. Außerdem können die Kolonnen mit unterschiedlichen Füllkörpern wie beispielsweise Sattelkörpern, Raschigringen oder Kugeln befüllt sein.

Bei Einbauten in Reaktoren und Behältern handelt es sich beispielsweise um Thermohülsen, Stromstörer, Schaumzerstörer, Füllkörper, Abstandhalter, Zentriereinrichtungen, Flanschverbindungen, statische Mischer, zur Analytik dienende Instrumente wie pH- oder IR-Sonden, Leitfähigkeitsmessinstrumente, Standmessungsgeräte oder Schaumsonden.

Bei Extruderelementen handelt es sich beispielsweise um Schneckenwellen, -elementen, Extruderzylinder, Plastifizierschnecken oder Einspritzdüsen.

Weiterhin können die Oberflächen zu Tankwagen, Kesselwagen oder Rohrleitungen gehören, in denen Dispersionen, bevorzugt Emulgator-haltige Dispersionen, transportiert, verarbeitet oder gelagert werden.

Die vorstehend genannten Apparate werden bevorzugt in chemischen Anlagen, aber auch in der Nahrungsmittelindustrie eingesetzt. Beispielhaft sei die Milchverarbeitung in Molkereien sowie der Transport von Milch in Tankwagen genannt. Unter Milchverarbeitung werden dabei die Sterilisierung durch Erhitzen oder die Verarbeitung zu beispielsweise Butter, Buttermilch, Quark, Käse, Joghurt oder Sahne verstanden.

Die hydrophobierten und strukturierten Oberflächen in den oben genannten Apparaten oder Apparateteilen lassen sich nur äußerst schlecht von Dispersionen aus lipophilen und hydrophilen Flüssigkeiten benetzen, insbesondere in Gegenwart eines oder mehrerer Emulgatoren. Dabei ist es für die erfindungsgemäße Verwendung unkritisch, ob es sich um Wasser-in-Öl-Dispersionen oder um Öl-in-Wasser-Dispersionen handelt. Auch sogenannte Miniemulsionen, wie sie in Römpps Lexikon der Chemie, G. Thieme Verlag Stuttgart, 10. Auflage, Bd. M - Pk (1998) definiert sind, hinterlassen keinerlei Rückstände.

### Arbeitsbeispiele

### Beispiel 1

Ein anoxidiertes Cu-Blech (Kupferfolie mit Schwarzoxidüberzug BOLTA ® 18 µm BO (Bolta-Werke GmbH) wurde eine Minute lang in eine alkoholische Fluosilan-Lösung Dynasilan F 8262® der Fa. Sivento GmbH, Degussa-Hüls AG getaucht und anschließend 1 Stunde lang bei 100°C getempert. Anschließend wurde es auf einem ebenen Tisch mit einem Neigungswinkel von 10° montiert. Dann wurden mit einer Pipette die folgenden Flüssigkeiten aufgetropft:
- Wasser mit einer Tropfenmasse von 46 mg
- Wässrige Polymerdispersion Acronal® 290 D (BASF AG) mit einer Tropfenmasse von 58 mg
- Wässrige Polymerdispersion Styronal® D 808 (BASF AG) mit einer Tropfenmasse von 54 mg
- Wässrige Polymerdispersion Acronal® V210 (BASF AG) mit einer Tropfenmasse von 43mg

Das Experiment wurde mehrmals wiederholt.

Keine der Flüssigkeiten führte zu einer Benetzung der hydrophobierten Folie. In allen Experimenten perlten die Tropfen von der hydrophobierten Folie ab, ohne Rückstände zu hinterlassen. Der Neigungswinkel des Tisches kann größer oder auch geringer sein als 10°, sollte aber mindestens 1° betragen.

### Beispiel 2

Es wurde analog zu Beispiel 1 vorgegangen, jedoch wurde die Dynasilan-Lösung aufgesprüht. Dabei wurde ein geschlossener Flüssigkeitsfilm auf der Kupferfolie erzeugt. Nach dem Tempern wurde wiederum durch Auftropfen der oben genannten Dispersionen und durch Wasser die Benetzung der Oberfläche der Kupferfolie untersucht. Keine der Flüssigkeiten führte zu einer Benetzung der hydrophobierten Folie. In allen Experimenten perlten die Tropfen von der hydrophobierten Folie ab, ohne Rückstände zu hinterlassen.

### Beispiel 3

Es wurde analog zu Beispiel 1 vorgegangen, jedoch wurde statt der Dynasilan-Lösung das Epilamisierungsmittel Antispread F2/50 FK 60® der Fa. Dr. Tillwich GmbH verwendet, und die Eintauchzeit betrug lediglich 10 Sekunden. Auf die Temperung wurde verzichtet. Anschließend wurde wiederum durch Auftropfen der oben genannten Dispersionen und durch Wasser die Benetzung der Oberfläche der Kupferfolie untersucht. Keine der Flüssigkeiten führte zu einer Benetzung der hydrophobierten Folie. In allen Experimenten perlten die Tropfen von der hydrophobierten Folie ab, ohne Rückstände zu hinterlassen.

## Patentansprüche

1. Verwendung von Apparaten und Apparateteilen mit Oberflächen, die eine Mikrostruktur, bestehend aus Erhebungen einer Höhe von 10 nm bis 10 µm im Abstand von 20 nm bis 10 µm oder entsprechend dimensionierte Rillen, oder eine Makrostruktur, bestehend aus Erhebungen in einer mittleren Höhe von 10 µm bis 1 mm und einem mittleren Abstand von 10 µm bis 1 mm, aufweisen und die hydrophobiert sind, bei Herstellung, Verarbeitung, Transport oder Lagerung von Dispersionen.

2. Verwendung von Apparaten und Apparateteilen mit Oberflächen, die eine Mikrostruktur, bestehend aus Erhebungen einer Höhe von 10 nm bis 10 µm im Abstand von 20 nm bis 10 µm oder entsprechend dimensionierte Rillen, sowie eine Makrostruktur, bestehend aus Erhebungen in einer mittleren Höhe von 10 µm bis 1 mm und einem mittleren Abstand von 10 µm bis 1 mm, aufweisen und die hydrophobiert sind, bei Herstellung, Verarbeitung, Transport oder Lagerung von Dispersionen.

3. Verwendung von Apparaten gemäß Anspruch 1 bei Herstellung, Verarbeitung, Transport oder Lagerung von Dispersionen, die mindestens einen Emulgator enthalten.

4. Verfahren zur Herstellung, Verarbeitung, zum Transport oder die Lagerung von Dispersionen, **dadurch gekennzeichnet, dass** man die Dispersionen in Apparaten oder mit Hilfe von Apparateteilen herstellt, verarbeitet, transportiert oder lagert, die Oberflächen aufweisen, die eine Mikrostruktur, bestehend aus Erhebungen einer Höhe von 10 nm bis 10 µm im Abstand von 20 nm bis 10 µm oder entsprechend dimensionierte Rillen, oder eine Makrostruktur, bestehend aus Erhebungen in einer mittleren Höhe von 10 µm bis 1 mm und einem mittleren Abstand von 10 µm bis 1 mm, aufweisen und die hydrophobiert sind.

5. Verfahren nach Anspruch 4, **dadurch gekennzeichnet, dass** man die Dispersionen in Apparaten oder mit Hilfe von Apparateteilen herstellt, verarbeitet, transportiert oder lagert, die Oberflächen aufweisen, die eine Mikrostruktur, bestehend aus Erhebungen einer Höhe von 10 nm bis 10 µm im Abstand von 20 nm bis 10 µm oder entsprechend dimensionierte Rillen, sowie eine Makrostruktur, bestehend aus Erhebungen in einer mittleren Höhe von 10 µm bis 1 mm und einem mittleren Abstand von 10 µm bis 1 mm, aufweisen und die hydrophobiert sind.
